# EUROPÄISCHE PATENTSCHRIFT

(11) **EP 3 658 770 B1**
(45) Veröffentlichungstag und Bekanntmachung des Hinweises auf die Patenterteilung: **05.10.2022**
(21) Anmeldenummer: 18743465.9
(22) Anmeldetag: 18.07.2018
(51) Int. Cl.: F03D 13/20, E04H 12/08, F03D 13/10

(54) **WINDENERGIEANLAGEN-STAHLTURMRINGSEGMENT UND VERFAHREN**
WIND TURBINE STEEL TOWER RING SEGMENT AND METHOD
SEGMENT ANNULAIRE DE TOUR EN ACIER POUR ÉOLIENNES ET PROCÉDÉ

(30) Priorität: 26.07.2017 DE 102017116873
(43) Veröffentlichungstag der Anmeldung: 03.06.2020
(73) Patentinhaber: Wobben Properties GmbH, 26607 Aurich (DE)
(72) Erfinder: KERSTEN, Roy, 39291 Hohenwarthe (DE)
(74) Vertreter: Eisenführ Speiser
(86) Internationale Anmeldenummer: PCT/EP2018/069534
(87) Internationale Veröffentlichungsnummer: WO 2019/020463

(56) Entgegenhaltungen:
- EP-A1- 1 561 883
- EP-A2- 2 060 706
- DE-A1-102011 077 428
- JP-A- S6 471 973

## Beschreibung

Die Erfindung betrifft ein Windenergieanlagen-Stahlturmringsegment, einen Windenergieanlagen-Turmabschnitt, einen Windenergieanlagen-Turm, eine Windenergieanlage sowie ein Verfahren zur Herstellung eines Windenergieanlagen-Turmabschnitts.

Windenergieanlagen sind bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist.

Türme sind in der Regel schlanke Bauwerke, die vorzugsweise eine große Höhe aufweisen und ferner vorzugsweise orthogonal zu dieser Höhe vergleichsweise geringe Abmessungen aufweisen. Türme bestehen vorzugsweise im Wesentlichen aus Beton und/oder Stahl oder umfassen diese Materialien. Die Bandbreite von Turmausführungen reicht von Gitterkonstruktionen über Stahlrohrtürme mit oder ohne Seilabspannung bis hin zu Betonbauten.

Stahlrohrtürme können aus einem einzelnen Bauteil oder mehreren Bauteilen bestehen oder derartige Bauteile umfassen. Türme können zylindrische und/oder konische Abschnitte, insbesondere entlang ihrer Längserstreckung, aufweisen, wobei Türme oftmals zylindrische und konische Abschnitte umfassen. Darüber hinaus können derartige Abschnitte auch ringsegmentweise ausgebildet werden, sodass ein zylindrischer Abschnitt aus verschiedenen Segmenten in Ringrichtung bzw. nebeneinander zusammengesetzt ist.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Insbesondere die größer werdenden Rotordurchmesser und Leistungen von Windenergieanlagen führen dazu, dass auch die Türme größer werden und/oder höheren Belastungen ausgesetzt sind. Die Türme werden einerseits hinsichtlich ihrer Höhe größer und andererseits in Bezug auf ihren Durchmesser, der bei einer Vielzahl heutiger Windenergieanlagen bereits 8 m und mehr aufweist. Vor allem die Fertigung und/oder Montage und/oder die Logistik der Türme ist bzw. sind zeit- und kostenaufwendig. Insbesondere bei segmentierten Stahltürmen, vor allem bei Stahltürmen, die in Umfangsrichtung segmentiert sind, werden regelmäßig Verzüge festgestellt, die die Montage des Turmes erschweren.

Im Stand der Technik bestehen verschiedene Ansätze zur Reduktion der Kosten und zur Erhöhung der Arbeitssicherheit bei der Fertigung und/oder Montage von Windenergieanlagen-Türmen. Beispielsweise wird in der DE 10 2011 077 428 A1 ein Windenergieanlagen-Turm mit einer Mehrzahl von Turmsegmenten beschrieben, wobei die Turmsegmente an horizontalen und vertikalen Flanschen aneinanderstoßen und hier miteinander befestigt sind. In den am 8. August 2016 und 22. März 2017 eingereichten deutschen Patentanmeldungen der hiesigen Anmelderin werden unterschiedliche Konzepte segmentierter Türme gezeigt. In der DE 10 2005 012 497 A1 wird hingegen eine Arbeitsbühne für einen Innenraum eines Windenergieanlagen-Turmes vorgeschlagen, die im Inneren eines turmartigen Bauwerks auch dann verwendet werden kann, wenn der Turm oben durch einen Aufbau verschlossen ist.

EP 1 561 883 A1 betrifft einen Turm für eine Windkraftanlage, der eine Außenseite und eine Innenseite hat und zumindest teilweise aus vorgefertigten Metallwandteilen zusammengesetzt ist.

Die existierenden Systeme und Verfahren zum Aufbau und zur Fertigung von Windenergieanlagen-Türmen bieten verschiedene Vorteile, jedoch sind weitere Verbesserungen wünschenswert. Es ist daher eine Aufgabe der vorliegenden Erfindung, ein Windenergieanlagen-Stahlturmringsegment, einen Windenergieanlagen-Turmabschnitt, einen Windenergieanlagen-Turm, eine Windenergieanlage sowie ein Verfahren zur Herstellung eines Windenergieanlagen-Turmabschnitts bereitzustellen, welche einen oder mehrere der genannten Nachteile vermindern oder beseitigen. Insbesondere ist es eine Aufgabe der Erfindung, eine Lösung bereitzustellen, die die Kosten einer Windenergieanlage, insbesondere die Kosten der Fertigung und/oder Montage eines Windenergieanlagen-Turmes, reduziert und/oder die Arbeitssicherheit bei der Fertigung und/oder Montage einer Windenergieanlage erhöht.

Das Deutsche Patent- und Markenamt hat in der Prioritätsanmeldung zur vorliegenden Anmeldung folgenden Stand der Technik recherchiert: DE 10 2005 012 497 A1, DE 10 2011 077 428 A1, DE 603 17 372 T2, DE 10 2014 118 251 A1, WO 2010/055 535 A1.

Diese Aufgabe wird gelöst durch ein Windenergieanlagen-Stahlturmringsegment nach Anspruch 1.

Das Windenergieanlagen-Stahlturmringsegment für einen Windenergieanlagen-Turm umfasst ein Mantelsegment mit einer Erstreckung in Richtung einer Segmenthöhe, einer Segment-Ringrichtung und einer Segmentdicke mit einer ersten Horizontalstoßseite und einer zweiten Horizontalstoßseite, einer ersten Vertikalstoßseite und einer zweiten Vertikalstoßseite, wobei an der ersten Vertikalstoßseite ein erster Vertikalflansch angeordnet ist und/oder an der zweiten Vertikalstoßseite ein zweiter Vertikalflansch angeordnet ist, wobei der erste Vertikalflansch und/oder der zweite Vertikalflansch einen Winkel mit dem Mantelsegment einschließt bzw. einschließen, wobei an dem ersten Vertikalflansch und/oder an dem zweiten Vertikalflansch mindestens ein Anschlusselement zur Anordnung von Funktionselementen ausgebildet ist, wobei das Anschlusselement ausgehend von dem ersten Vertikalflansch und/oder dem zweiten Vertikalflansch auskragt.

Im eingebauten Zustand ist die Segmenthöhe des Mantelsegments vorzugsweise und im Wesentlichen parallel zu einer Längsachse des Windenergieanlagen-Turmes. Die Segment-Ringrichtung des Mantelsegments verläuft im eingebauten Zustand im Wesentlichen parallel zur Umfangsrichtung des Windenergieanlagen-Turmes, sodass diese in einer im Wesentlichen tangentialen Richtung verläuft. Dies gilt ebenso für unrunde Turmquerschnitte, die beispielsweise eine polygonale Geometrie aufweisen können. Die Segmentdicke des Mantelsegments ist im Wesentlichen orthogonal zur Segmenthöhe und zur Segment-Ringrichtung ausgerichtet, sodass die Segmentdicke im eingebauten Zustand im Wesentlichen in radialer Richtung des Windenergieanlagen-Turmes ausgerichtet ist.

Die erste Horizontalstoßseite ist vorzugsweise gegenüberliegend von der zweiten Horizontalstoßseite angeordnet. Die erste Horizontalstoßseite und die zweite Horizontalstoßseite sind ferner vorzugsweise derart angeordnet und ausgebildet, dass das Mantelsegment in geeigneter Weise über einem weiteren Mantelsegment anordenbar ist. Die erste Vertikalstoßseite ist vorzugsweise gegenüberliegend von der zweiten Vertikalstoßseite angeordnet, wobei die erste Vertikalstoßseite und die zweite Vertikalstoßseite im Wesentlichen orthogonal zu den Horizontalstoßseiten angeordnet sind. Die erste Vertikalstoßseite und die zweite Vertikalstoßseite sind vorzugsweise derart angeordnet und ausgebildet, dass diese das Anordnen des Mantelsegments neben einem weiteren Mantelsegment ermöglicht, sodass die zwei oder mehr nebeneinander angeordneten Mantelsegmente in Ringrichtung bzw. in Umfangsrichtung nebeneinander einen Ring ergeben können.

Um einer sich verjüngenden Geometrie von Windenergieanlagen-Türmen gerecht zu werden, ist es insbesondere bevorzugt, dass die Mantelsegmente eine trapezförmige Geometrie aufweisen. Somit sind die erste Vertikalstoßseite und die zweite Vertikalstoßseite nicht ideal parallel zueinander ausgerichtet, wobei die Abweichungen von dieser idealen Parallelität aufgrund der großen Abmessungen eines Windenergieanlagen-Turmes vorliegend zu vernachlässigen sind. Ebenso die orthogonale Anordnung der Horizontalstoßseiten zu den Vertikalstoßseiten ist dementsprechend idealisiert beschrieben, wobei auch hier nicht zwingend ein 90-Grad-Winkel zwischen einer Horizontal- und Vertikalstoßseite herrschen muss, sondern gewisse Abweichungen möglich sind.

Der erste Vertikalflansch und/oder der zweite Vertikalflansch erstreckt bzw. erstrecken sich vorzugsweise vollständig oder abschnittsweise entlang der ersten Vertikalstoßseite bzw. der zweiten Vertikalstoßseite. Insbesondere ist es bevorzugt, dass der erste Vertikalflansch und/oder der zweite Vertikalflansch durch einen geraden Abschnitt ausgebildet ist bzw. sind. Die Vertikalflansche können entweder als separate Elemente an den Vertikalstoßseiten angeordnet werden oder die Vertikalflansche sind integral mit dem Mantelsegment verbunden. Die integrale Verbindung der Vertikalflansche mit dem Mantelsegment ist vorzugsweise derart ausgeführt, dass die Vertikalflansche als umgebogene Endabschnitte des Mantelsegments ausgebildet sind. Alternativ können die Vertikalflansche an den Vertikalstoßseiten beispielsweise angeschweißt werden.

Insbesondere ist es bevorzugt, dass der erste Vertikalflansch und/oder der zweite Vertikalflansch derart angeordnet und ausgebildet ist bzw. sind, dass dieser bzw. diese mit einem Vertikalflansch eines benachbarten Windenergieanlagen-Stahlturmringsegments verbindbar ist bzw. sind. Der erste Vertikalflansch und/oder der zweite Vertikalflansch kann bzw. können Durchtrittsöffnungen aufweisen, die beispielsweise eine im Wesentlichen parallel zur Segment-Ringrichtung ausgerichtete Durchtrittsrichtung aufweisen. Somit kann das Windenergieanlagen-Stahlturmringsegment mit einem benachbarten Windenergieanlagen-Stahlturmringsegment verbunden werden, wenn dieses benachbarte Windenergieanlagen-Stahlturmringsegment korrespondierende Durchtrittsöffnungen aufweist.

Der erste Vertikalflansch und/oder der zweite Vertikalflansch schließen mit dem Mantelsegment einen Winkel ein, sodass diese vorzugsweise vom Mantelsegment aus gesehen abgeknickt sind. Durch die gewinkelte Anordnung des ersten Vertikalflansches und/oder des zweiten Vertikalflansches zu dem Mantelsegment besteht in besonders vorteilhafter Weise die Möglichkeit, das Windenergieanlagen-Stahlturmringsegment mit einem benachbarten Windenergieanlagen-Stahlturmringsegment zu verbinden, indem die gewinkelten Vertikalflansche miteinander verbunden werden. Insbesondere kann bzw. können der erste Vertikalflansch und/oder der zweite Vertikalflansch mit einem oder zwei vertikalstoßseitigen Endabschnitten des Mantelsegments einen Winkel einschließen.

An dem ersten Vertikalflansch und/oder an dem zweiten Vertikalflansch ist mindestens ein Anschlusselement zur Anordnung von Funktionselementen ausgebildet. Insbesondere kragt das mindestens eine Anschlusselement ausgehend von dem ersten Vertikalflansch und/oder dem zweiten Vertikalflansch aus. Insbesondere ist es bevorzugt, dass das Anschlusselement von genau einem Vertikalflansch, also von dem ersten Vertikalflansch oder dem zweiten Vertikalflansch, auskragt. Das Anschlusselement kann angeordnet und ausgebildet sein, das an diesem Tragstrukturen anordenbar sind.

Der Erfindung liegt unter anderem die Erkenntnis zugrunde, dass das Anschweißen von Tragstrukturen an Mantelsegmente von Windenergieanlagen-Stahlturmringsegmenten regelmäßig mit einem Verzug eben dieser Windenergieanlagen-Stahlturmringsegmente resultiert. Darüber hinaus werden durch das Einbringen der Wärme während des Schweißprozesses die Materialeigenschaften des Stahls verändert, sodass das Windenergieanlagen-Stahlturmringsegments gegebenenfalls nicht mehr die ursprünglich festgelegten und eingestellten Materialeigenschaften, wie beispielsweise Festigkeit und/oder Härte, aufweist. Der Verzug des Mantelsegments resultiert ferner in einer deutlich aufwendigeren Montage, da die Windenergieanlagen-Stahlturmringsegmente durch den Verzug keine optimale Passung mehr aufweisen. Daraus folgt unter anderem auch, dass die Türme während der Montage gespannt werden und diese Spannungen zu unerwünschten Spannungsverhältnissen im Turm führen können.

Diese Nachteile können durch ein erfindungsgemäß ausgebildetes und angeordnetes Anschlusselement vermindert oder beseitigt werden, wobei dieses Anschlusselement an einem oder mehreren der Vertikalflansche angeordnet ist und von dort aus absteht. An diesem Anschlusselement können dann unterschiedlichste weitere Vorrichtungen und/oder Einheiten und/oder Elemente befestigt werden, sodass diese vormals im Mantelsegment anzuordnenden Vorrichtungen und Einheiten nun direkt am Anschlusselement befestigt werden können und somit nicht mehr unmittelbar am Mantelsegment geschweißt wird.

Das erfindungsgemäß ausgebildete und angeordnete Anschlusselement hat den besonderen Vorteil, dass hier mit geringen Kosten Funktionselemente angeordnet werden können. In Frage kommen beispielsweise Tragstrukturen, an denen Montagepodeste angeordnet werden. Darüber hinaus können an den Anschlusselementen auch Versorgungseinrichtungen, wie beispielsweise Kabel oder Kabelstränge oder Kabelstranghaltevorrichtungen angeordnet werden.

Gemäß der Erfindung ist vorgesehen, dass der erste Vertikalflansch und/oder der zweite Vertikalflansch und das Anschlusselement den gleichen Winkel mit dem Mantelsegment einschließen. In einer bevorzugten Ausführungsvariante des Windenergieanlagen-Stahlturmringsegments ist vorgesehen, dass das Anschlusselement einen Anschlusswinkel mit dem Mantelsegment einschließt, der verschieden ist von einem Flanschwinkel, den der erste Vertikalflansch und/oder der zweite Vertikalflansch mit dem Mantelsegment einschließt bzw. einschließen. Der erste Vertikalflansch und/oder der zweite Vertikalflansch können in dieser Ausführungsvariante somit fluchtend mit dem Anschlusselement angeordnet sein. Vorzugsweise bildet das Anschlusselement sozusagen eine Verlängerung des ersten Vertikalflansches und/oder des zweiten Vertikalflansches. Somit ist das Anschlusselement besonders kostengünstig an dem ersten Vertikalflansch und/oder dem zweiten Vertikalflansch anordenbar, wobei darüber hinaus Vereinfachungen im Ablauf der Fertigung ermöglicht werden. Alternativ ragen die Anschlusselemente in eine andere Richtung als die Vertikalflansche.

Gemäß einer weiteren bevorzugten Ausführungsvariante des Windenergieanlagen-Stahlturmringsegments ist vorgesehen, dass sich das Anschlusselement in Richtung einer Anschlusshöhe, einer Anschlussbreite und einer Anschlussdicke erstreckt und/oder das Anschlusselement durch die Erstreckung in Richtung der Anschlusshöhe und der Anschlussbreite eine im Wesentlichen flächige Erstreckung aufweist, wobei die flächige Erstreckung vorzugsweise im Wesentlichen rechteckig ist.

Ferner ist es bevorzugt, dass der erste Vertikalflansch und/oder der zweite Vertikalflansch eine Erstreckung aufweist in Richtung einer Flanschhöhe, die parallel zur Segmenthöhe ausgerichtet ist, einer Flanschbreite, die orthogonal zur Segment-Ringrichtung und orthogonal zur Segmenthöhe ausgerichtet ist, und einer Flanschdicke, die orthogonal zur Flanschhöhe und orthogonal zur Flanschbreite ausgerichtet ist. Insbesondere kann die Flanschdicke im Wesentlichen parallel zur Segment-Ringrichtung ausgerichtet sein. Darüber hinaus kann die Anschlussdicke vorzugsweise parallel zur Flanschdicke und/oder die Anschlussbreite parallel zur Flanschbreite und/oder die Anschlusshöhe parallel zur Flanschhöhe ausgerichtet sein.

Eine weitere bevorzugte Fortbildung des Windenergieanlagen-Stahlturmringsegments zeichnet sich dadurch aus, dass die Erstreckung des Anschlusselements in Richtung der Anschlusshöhe geringer ist, insbesondere um ein Vielfaches geringer ist, als eine Erstreckung des Mantelsegments in Richtung der Segmenthöhe. Im Gegensatz zu dem Mantelsegment oder auch den Vertikalflanschen ist die Erstreckung des Anschlusselements somit vorzugsweise lokal begrenzt. Darüber hinaus ist es bevorzugt, dass die Erstreckung des Anschlusselements in Richtung der Anschlusshöhe kleiner 20 %, und/oder kleiner 15 %, und/oder kleiner 10 %, und/oder kleiner 5 %, und/oder kleiner 2 %, und/oder kleiner 1 %, und/oder kleiner 0,1 % der Erstreckung des Mantelsegments in Richtung der Segmenthöhe ist.

Eine weitere besonders bevorzugte Ausführungsvariante des Windenergieanlagen-Stahlturmringsegments sieht vor, dass die flächige Erstreckung des Anschlusselements eine Flächennormale aufweist, wobei die Flächennormale in Richtung der Segment-Ringrichtung und/oder in Richtung der Segmentdicke ausgerichtet ist. Insbesondere ist es bevorzugt, dass diese Flächennormale Richtungsanteile aufweist, die parallel zur Segmenthöhe und zur Segment-Ringrichtung ausgerichtet sind.

Insbesondere ist es bevorzugt, dass die Anschlussdicke und die Flanschdicke die gleiche Abmessung aufweisen. Ferner ist es bevorzugt, dass das Windenergieanlagen-Stahlturmringsegment ein erstes Anschlusselement und ein zweites Anschlusselement umfasst, wobei sich das Mantelsegment in Richtung der Segmenthöhe von einem oberen Ende zu einem unteren Ende erstreckt und/oder das erste Anschlusselement an dem ersten Vertikalflansch und das zweite Anschlusselement an dem zweiten Vertikalflansch angeordnet sind und wobei das erste Anschlusselement und das zweite Anschlusselement die gleiche Beabstandung zu dem oberen Ende und/oder dem unteren Ende aufweisen. Diese Ausführungsvariante hat insbesondere den Vorteil, dass ein Funktionselement, insbesondere eine Tragstruktur, an dem ersten Anschlusselement und an dem zweiten Anschlusselement angeordnet werden kann und eine im Wesentlichen horizontal ausgerichtete Verbindungsstrecke zwischen den zwei Anschlusselementen ermöglicht wird.

In einer bevorzugten Ausführungsvariante des Windenergieanlagen-Stahlturmringsegments umfasst dieses ein drittes Anschlusselement und ein viertes Anschlusselement, wobei die Fläche der flächigen Erstreckung des ersten Anschlusselements und des zweiten Anschlusselements mehr als die zweifache Größe der Fläche der flächigen Erstreckung des dritten Anschlusselements und des vierten Anschlusselements aufweisen. Ferner ist es bevorzugt, dass das erste Anschlusselement und das dritte Anschlusselement am ersten Vertikalflansch angeordnet sind und das zweite Anschlusselement und das vierte Anschlusselement an dem zweiten Vertikalflansch angeordnet sind.

Gemäß einer weiteren bevorzugten Ausführungsvariante des Windenergieanlagen-Stahlturmringsegments ist vorgesehen, dass das Mantelsegment und der erste Vertikalflansch und/oder das Mantelsegment und der zweite Vertikalflansch einstückig ausgebildet sind, und/oder das Mantelsegment und der erste Vertikalflansch einstückig mit dem Anschlusselement ausgebildet sind, und/oder das Mantelsegment und der zweite Vertikalflansch einstückig mit dem Anschlusselement ausgebildet sind. Hieraus ergibt sich ein qualitativ besonders hochwertiges Windenergieanlagen-Stahlturmringsegment, da keine relevante Wärmeeintragung durch Schweißen stattfand. Weder die Vertikalflansche noch die Anschlusselemente werden mittels eines Schweißverfahrens an dem Mantelsegment angeordnet, wodurch zwangsläufig Wärme in das Mantelsegment eingebracht worden wäre. Dies hätte unter anderem die bereits im Vorhergehenden erläuterten Nachteile in Bezug auf den Verzug des Mantelsegments sowie veränderte Materialeigenschaften zur Folge.

Eine weitere bevorzugte Fortbildung des Windenergieanlagen-Stahlturmringsegments zeichnet sich dadurch aus, dass in einem Biegeabschnitt, der vorzugsweise linienförmig ausgebildet ist, im Übergang zwischen dem Mantelsegment und dem ersten Vertikalflansch und/oder zwischen dem Mantelsegment und zweiten Vertikalflansch eine Ausnehmung, insbesondere eine Vertiefung und/oder eine Durchgangsöffnung, angeordnet ist, wobei vorzugsweise die Ausnehmung als Fuge und/oder Kerbe und/oder Schlitz ausgebildet ist und insbesondere mittels Fräsen und/oder Fugenhobeln hergestellt ist.

Die Ausnehmung kann beispielsweise entlang einer Biegelinie angeordnet werden, entlang derer die Biegung erfolgt. Die Ausnehmung ist vorzugsweise in einem konvexen und/oder konkaven Bereich des Biegeabschnitts angeordnet. Es können auch zwei oder mehr Ausnehmungen im Biegeabschnitt angeordnet sein. Der Biegeabschnitt ist insbesondere als solcher Abschnitt zu verstehen, in dem das Ausgangsmaterial umgebogen wird, sodass der abgekantete Vertikalflansch relativ zu dem Mantelsegment entsteht. Aus technischer Perspektive ist der Biegeabschnitt somit der Abschnitt, in dem das Material gedehnt und/oder gestaucht wird. Der Biegeabschnitt ist auch der Abschnitt, in dem das Mantelsegment in den Vertikalflansch übergeht.

Eine Ausnehmung in dem Biegeabschnitt hat den besonderen Vorteil, dass der Biegeprozess optimiert wird, insbesondere indem die erforderlichen Biegekräfte reduziert werden. Darüber hinaus werden einstückig ausgebildete Windenergieanlagen-Stahlturmringsegmente mit besonders großen Wandstärken durch eine derartige Ausnehmung erst ermöglicht, da die Biegekräfte bei hohen Wandstärken zu hoch sind. Die Ausnehmung kann beispielsweise mittels Fräsen und/oder Fugenhobeln hergestellt werden. Insbesondere ist es bevorzugt, dass die Ausnehmung in einem planen Ausgangsmaterial eingefügt wird und in einem anschließenden Verarbeitungsprozess das Ausgangsmaterial derart gebogen wird, dass ein Mantelsegment und ein Vertikalflansch entstehen, wobei die Ausnehmung in dem Biegeabschnitt verortet ist.

In einer besonders bevorzugten Fortbildung des Windenergieanlagen-Stahlturmringsegments ist vorgesehen, dass das Mantelsegment einen teilringförmigen Querschnitt aufweist, wobei eine Flächennormale des Querschnitts im Wesentlichen parallel zur Segmenthöhe ausgerichtet ist und der teilringförmige Querschnitt einen teilkreisförmigen Verlauf aufweist und/oder der teilringförmige Querschnitt durch zwei oder mehrere gerade Abschnitte ausgebildet wird, wobei die zwei oder mehreren geraden Abschnitte gewinkelt zueinander angeordnet sind. Die zuletzt genannte Variante mit den zwei oder mehreren geraden Abschnitten wird in der Praxis oftmals auch als abgewinkelte Variante bezeichnet.

Darüber hinaus ist es bevorzugt, dass das Windenergieanlagen-Stahlturmringsegment mindestens ein Flanschsegment umfasst mit einem teilringförmigen Grundkörper, der sich von einem ersten Ende zu einem zweiten Ende in Ringrichtung erstreckt, mit einer Oberseite und einer der Oberseite gegenüberliegenden Unterseite, einer Innenumfangsfläche und einer Außenumfangsfläche, und einer ersten Grundkörperstoßseite am ersten Ende und einer zweiten Grundkörperstoßseite am zweiten Ende, einem Flanschvorsprung, welcher auf der Oberseite des Grundkörpers angeordnet ist und sich im Wesentlichen von dem ersten Ende zu dem zweiten Ende in Ringrichtung erstreckt, wobei das mindestens eine Flanschsegment an der ersten Horizontalstoßseite und/oder an der zweiten Horizontalstoßseite angeordnet ist und/oder anordenbar ist.

Gemäß einem weiteren Aspekt wird die eingangs genannte Aufgabe gelöst durch einen Windenergieanlagen-Turmabschnitt, umfassend mindestens ein erstes Windenergieanlagen-Stahlturmringsegment nach mindestens einer der im Vorherigen beschriebenen Ausführungsvarianten und ein zweites Windenergieanlagen-Stahlturmringsegment nach mindestens einer der im Vorherigen beschriebenen Ausführungsvarianten, wobei das erste Windenergieanlagen-Stahlturmringsegment und das zweite Windenergieanlagen-Stahlturmringsegment an mindestens einem im Wesentlichen vertikalen Stoß mit Vertikalflanschen aneinanderstoßen, und wobei das erste Windenergieanlagen-Stahlturmringsegment und das zweite Windenergieanlagen-Stahlturmringsegment an dem mindestens einen im Wesentlichen vertikalen Stoß miteinander verbunden sind.

Darüber hinaus wird die eingangs genannte Aufgabe gelöst durch den Aspekt eines Windenergieanlagen-Turm, umfassend zwei oder mehrere übereinander angeordnete Windenergieanlagen-Turmabschnitte nach dem vorherigen Aspekt.

Gemäß einem weiteren Aspekt wird die eingangs genannte Aufgabe gelöst durch einen Windenergieanlagen-Turm für eine Windenergieanlage, umfassend mindestens ein zuvor beschriebenes Windenergieanlagen-Stahlturmringsegment, mindestens einen Laschen-Stahlturmabschnitt, aufweisend ein erstes Laschen-Stahlturmringsegment mit einer ersten Laschen-Vertikalstoßseite, ein zweites Laschen-Stahlturmringsegment mit einer zweiten Laschen-Vertikalstoßseite, ein Laschenelement, das an einem Stoß angeordnet ist und mit dem ersten Laschen-Stahlturmringsegment und dem zweiten Laschen-Stahlturmringsegment verbunden ist, wobei das erste Laschen-Stahlturmringsegment mit der ersten Laschen-Vertikalstoßseite und das zweite Laschen-Stahlturmringsegment mit der zweiten Laschen-Vertikalstoßseite an dem Stoß aneinander angeordnet sind, und wobei das Laschenelement ein von dem Laschenelement auskragendes Anschlusselement zur Anordnung von Funktionselementen aufweist, wobei vorzugsweise das Windenergieanlagen-Stahlturmringsegment einer Turmspitze des Windenergieanlagen-Turms zugewandt und der Laschen-Stahlturmabschnitt der Turmspitze abgewandt angeordnet sind.

Der Laschen-Stahlturmabschnitt entspricht in seinen Ausgestaltungen und Details vorzugsweise dem in der deutschen Patentanmeldung "Windenergieanlagen-Stahlturmabschnitt für einen Windenergieanlagen-Turm und Verfahren zur Herstellung" derselben Anmelderin vom 26. Juli 2017 beschriebenen Stahlturmabschnitt. Diese Anmeldung ist hierin durch Verweis vollständig einbezogen.

Der Windenergieanlagen-Turm mit mindestens einem zuvor beschriebenen Windenergieanlagen-Stahlturmringsegment und mindestens einem Laschen-Stahlturmabschnitt ermöglicht es, die Vorteile der beiden Ausgestaltungen miteinander zu kombinieren. Insbesondere in den Bereichen, in denen der Windenergieanlagen-Turm besonders hohen Belastungen ausgesetzt ist, was in der Regel im unteren Bereich der Fall ist, ist es bevorzugt, einen Laschen-Stahlturmabschnitt einzusetzen. Insbesondere in den Bereichen, in denen der Windenergieanlagen-Turm niedrigeren Belastungen ausgesetzt ist, was in der Regel im oberen Bereich der Fall ist, ist es bevorzugt, ein zuvor beschriebenes Stahlturmringsegment einzusetzen.

Ferner wird die eingangs genannte Aufgabe gelöst durch eine Windenergieanlage, umfassend einen Windenergieanlagen-Turm nach dem vorherigen Aspekt.

Die eingangs genannte Aufgabe wird darüber hinaus gelöst durch ein Verfahren zur Herstellung eines Windenergieanlagen-Turmabschnitts, insbesondere eines Windenergieanlagen-Turmabschnitts nach dem vorherigen Aspekt, umfassend Bereitstellen mindestens eines ersten Windenergieanlagen-Stahlturmringsegments und eines zweiten Windenergieanlagen-Stahlturmringsegments nach mindestens einer der im Vorherigen beschriebenen Ausführungsvarianten, Anordnen des ersten Windenergieanlagen-Stahlturmringsegments und des zweiten Windenergieanlagen-Stahlturmringsegments an mindestens einem vertikalen Stoß mit jeweils einer der Vertikalstoßseiten, Verbinden des ersten Windenergieanlagen-Stahlturmringsegments und des zweiten Windenergieanlagen-Stahlturmringsegments an dem mindestens einen vertikalen Stoß durch Befestigen zweier benachbarter Vertikalflansche.

Insbesondere ist es bevorzugt, dass das Verfahren den Schritt umfasst Anordnen eines Funktionselements, beispielsweise einer Trageinheit, an mindestens einem Anschlusselement.

Das erfindungsgemäße Verfahren und seine möglichen Fortbildungen weisen Merkmale bzw. Verfahrensschritte auf, die sie insbesondere dafür geeignet machen, für ein erfindungsgemäßes Windenergieanlagen-Stahlturmringsegment und seine Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Windenergieanlagen-Stahlturmringsegments verwiesen.

Bevorzugte Ausführungsformen der Erfindung werden beispielhaft anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische, zweidimensionale Ansicht zweier beispielhafter Ausführungsformen von Windenergieanlagen-Stahlturmringsegmenten;
- Figur 3:: eine schematische, dreidimensionale Teilansicht einer beispielhaften Ausführungsform eines Windenergieanlagen-Stahlturmringsegments;
- Figur 4:: eine weitere schematische, dreidimensionale Ansicht einer beispielhaften Ausführungsform eines Windenergieanlagen-Stahlturmringsegments;
- Figur 5:: eine schematische, dreidimensionale stirnseitige Ansicht des Windenergieanlagen-Stahlturmringsegments aus Figur 4;
- Figur 6:: eine weitere schematische, dreidimensionale stirnseitige Ansicht des Windenergieanlagen-Stahlturmringsegments aus Figur 4;
- Figur 7:: eine weitere schematische, dreidimensionale stirnseitige Ansicht des in Figur 4 gezeigten Windenergieanlagen-Stahlturmringsegments;
- Figur 8:: eine schematische, dreidimensionale Ansicht zweier beispielhafter Ausführungsformen von Windenergieanlagen-Stahlturmringsegmenten;
- Figur 9:: eine schematische, dreidimensionale Teilansicht einer beispielhaften Ausführungsform eines Windenergieanlagen-Turmes;
- Figur 10:: eine schematische dreidimensionale Teilansicht einer beispielhaften Ausführungsform eines Stahlturmringsegments mit einer Ausnehmung;
- Figur 11:: eine schematische, dreidimensionale Teilansicht des Stahlturmringsegments aus Figur 10 mit einem entgegengesetzt umgekanteten Vertikalflansch;
- Figur 12:: eine schematische, dreidimensionale Teilansicht eines Halbzeugs für in den Figuren 10 und 11 gezeigte Stahlturmringsegmente;
- Figur 13:: eine schematische, dreidimensionale Teilansicht einer beispielhaften Ausführungsform eines Windenergieanlagen-Turmabschnitts;
- Figur 14:: eine schematische, dreidimensionale Teilansicht eines Windenergieanlagen-Turmes;
- Figur 15:: eine weitere schematische, dreidimensionale Teilansicht des Windenergieanlagen-Turmes aus Figur 14;
- Figur 16:: eine schematische, zweidimensionale Teilansicht einer beispielhaften Ausführungsform eines weiteren Windenergieanlagen-Turmes.

In den Figuren sind gleiche oder im Wesentlichen funktionsgleiche bzw. -ähnliche Elemente mit den gleichen Bezugszeichen bezeichnet.

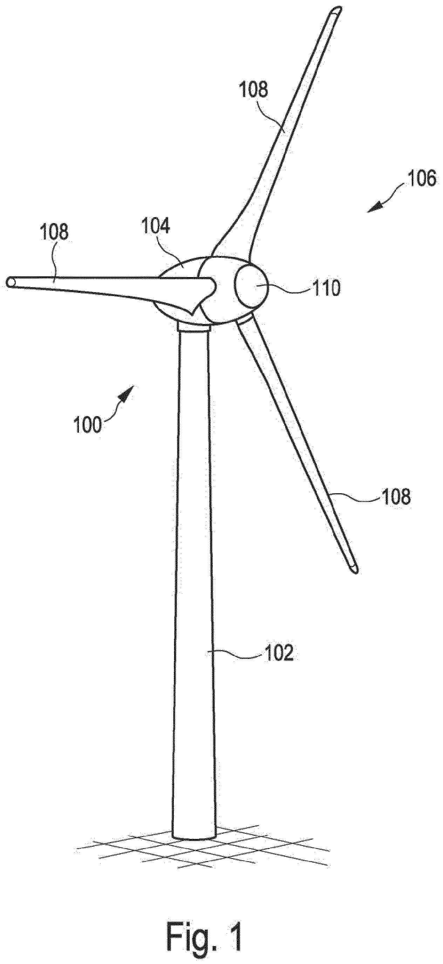

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator an der Gondel 104 an. Der Turm 102 umfasst insbesondere eine Mehrzahl an Windenergieanlagen-Stahlturmringsegmenten mit an Vertikalflanschen angeordneten Anschlusselementen zur Anordnung von Funktionselementen.

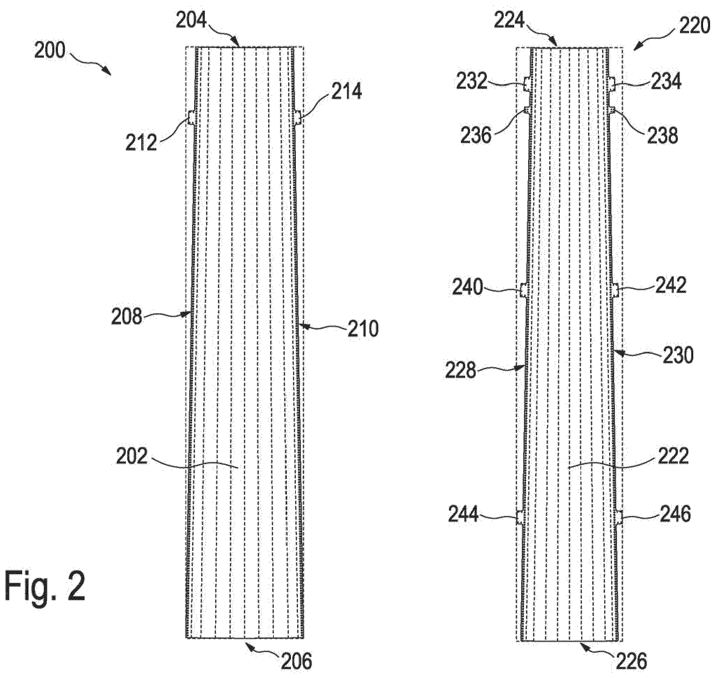

Figur 2 zeigt eine schematische, zweidimensionale Ansicht zweier beispielhafter Ausführungsformen von Windenergieanlagen-Stahlturmringsegmenten. Das Mantelsegment 202 des Stahlturmringsegments 200 erstreckt sich von einer oberen Horizontalstoßseite 204 zu einer unteren Horizontalstoßseite 206. Im Wesentlichen orthogonal zu den Horizontalstoßseiten 204, 206 sind die erste Vertikalstoßseite 208 und die zweite Vertikalstoßseite 210 angeordnet. An den Vertikalstoßseiten 208, 210 sind hier lediglich angedeutet dargestellte Vertikalflansche angeordnet. In einem Abschnitt angrenzend an die erste Horizontalstoßseite 204 sind an der ersten Vertikalstoßseite 208 ein erstes Anschlusselement 212 und an der zweiten Vertikalstoßseite 210 ein zweites Anschlusselement 214 angeordnet.

Das Mantelsegment 222 des Stahlturmringsegments 220 erstreckt sich ebenfalls von einer oberen Horizontalstoßseite 224 zu einer unteren Horizontalstoßseite 226 sowie zwischen einer ersten Vertikalstoßseite 228 zu einer zweiten Vertikalstoßseite 230. Angrenzend an einen Abschnitt an die erste Horizontalstoßseite 224 sind an der ersten Vertikalstoßseite 228 ein erstes Anschlusselement 232 und ein drittes Anschlusselement 236 angeordnet. An der zweiten Vertikalstoßseite 230 sind ein zweites Anschlusselement 234 und ein viertes Anschlusselement 238 angeordnet. Das erste Anschlusselement 232 weist den gleichen Abstand von der oberen Horizontalstoßseite auf wie das zweite Anschlusselement 234. Analog hierzu weist das dritte Anschlusselement 236 die gleiche Beabstandung zur oberen Horizontalstoßseite 224 wie das vierte Anschlusselement 238 auf.

Das erste Anschlusselement 232 und das zweite Anschlusselement 234 weisen eine flächige Erstreckung auf, die mehr als die doppelte Fläche des dritten Anschlusselements 236 und des vierten Anschlusselements 238 beträgt. An dem Stahlturmringsegment 220 sind ferner ein fünftes und ein sechstes Anschlusselement 240, 242 angeordnet, die in einem mittigen Abschnitt des Stahlturmringsegments 220 angeordnet sind. Auch die Anschlusselemente 240, 242 weisen jeweils die gleiche Beabstandung zur oberen Horizontalstoßseite 224, aber ebenfalls auch zur unteren Horizontalstoßseite 226 auf. In einem Abschnitt angrenzend an die untere Horizontalstoßseite 226 sind ferner ein siebtes Anschlusselement 244 und ein achtes Anschlusselement 246 angeordnet.

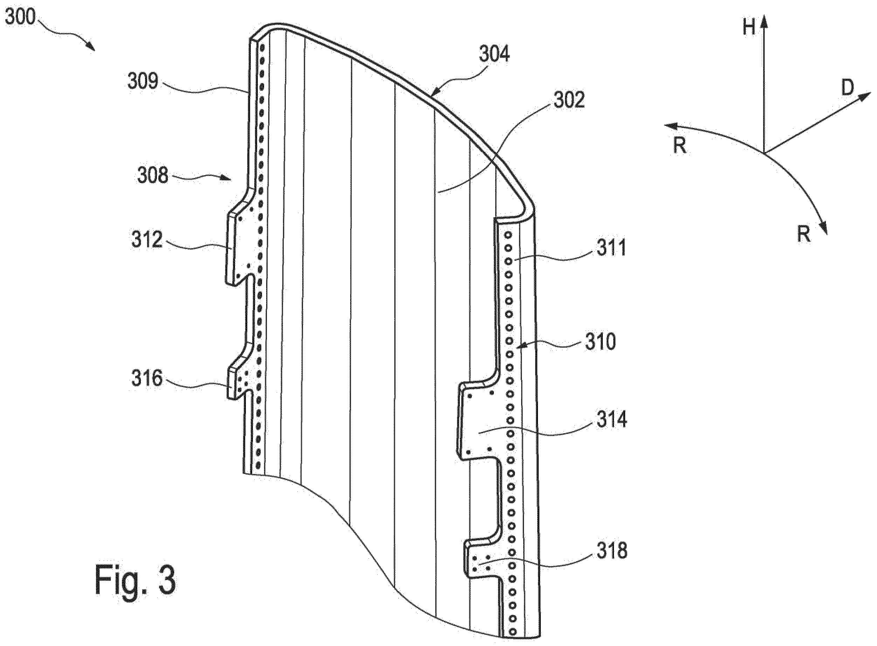

Figur 3 zeigt eine schematische, dreidimensionale Teilansicht einer beispielhaften Ausführungsform eines Windenergieanlagen-Stahlturmringsegments. Das Stahlturmringsegment 300 weist analog zu den im Vorherigen beschriebenen Stahlturmringsegmenten ein Mantelsegment 302 auf, das sich von einer oberen Horizontalstoßseite 304 zu einer hier nicht gezeigten unteren Horizontalstoßseite erstreckt und orthogonal zu dieser Erstreckungsrichtung sich von der ersten Vertikalstoßseite 308 zu der zweiten Vertikalstoßseite 310 erstreckt. An der ersten Vertikalstoßseite 308 ist ein erster Vertikalflansch 309, und an der zweiten Vertikalstoßseite 310 ist ein zweiter Vertikalflansch 311 angeordnet. Die Vertikalflansche 309, 311 schließen jeweils einen Winkel mit dem Mantelsegment ein.

An dem ersten Vertikalflansch 309 sind integral ein erstes Anschlusselement 312 und ein drittes Anschlusselement 316 ausgebildet, wobei sich die Anschlusselemente 312, 316 in die gleiche Richtung erstrecken wie der erste Vertikalflansch 309. Analog hierzu sind an dem zweiten Vertikalflansch 311 ein zweites Anschlusselement 314 und ein viertes Anschlusselement 318 ausgebildet, die sich in die gleiche Richtung erstrecken wie der zweite Vertikalflansch 311. Die Anschlusselemente 312, 314, 316, 318 weisen jeweils eine flächige Erstreckung auf, wobei deren Dicke in Dickenrichtung D auch als Materialstärke bezeichnet werden kann. Die Dicke bzw. Materialstärke der Anschlusselemente 312, 314, 316, 318, der Vertikalflansche 309, 311 sowie des Mantelsegments 302 ist im Wesentlichen gleich. Das Mantelsegment 302 weist ferner einen teilringförmigen Querschnitt auf, dessen Flächennormale im Wesentlichen parallel zur Segmenthöhe in Segmenthöhenrichtung H ausgerichtet ist und der teilringförmige Querschnitt durch insgesamt acht gerade Abschnitte ausgebildet wird, wobei die acht geraden Abschnitte gewinkelt zueinander angeordnet sind und sich zudem in Ringrichtung R erstrecken, sodass der teilringförmige Querschnitt entsteht.

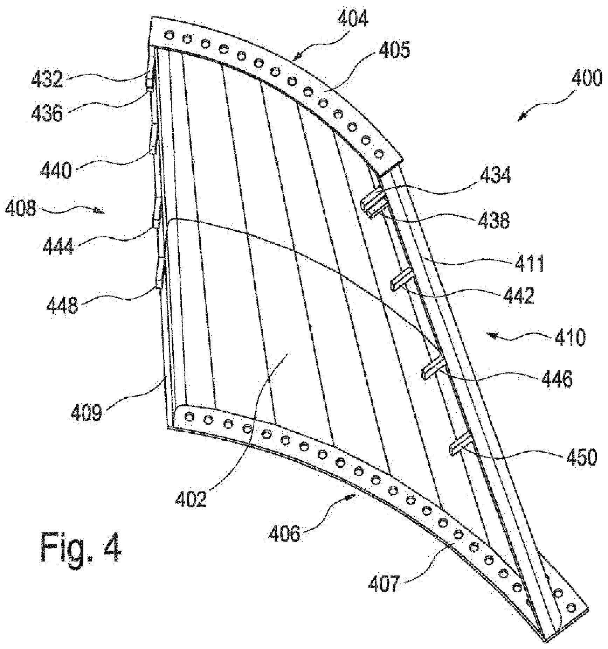

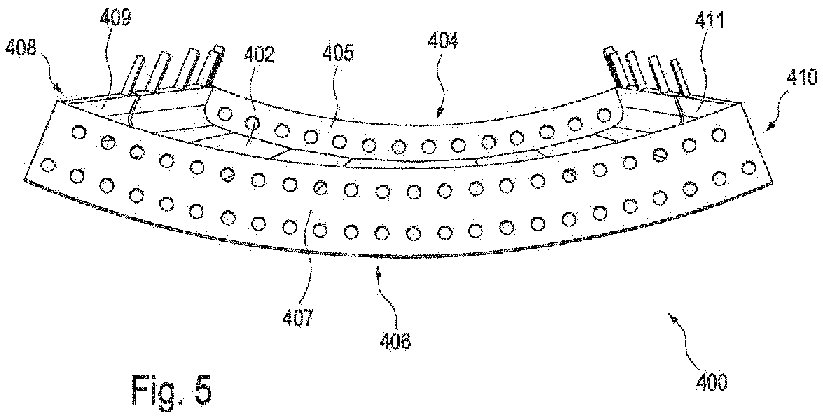

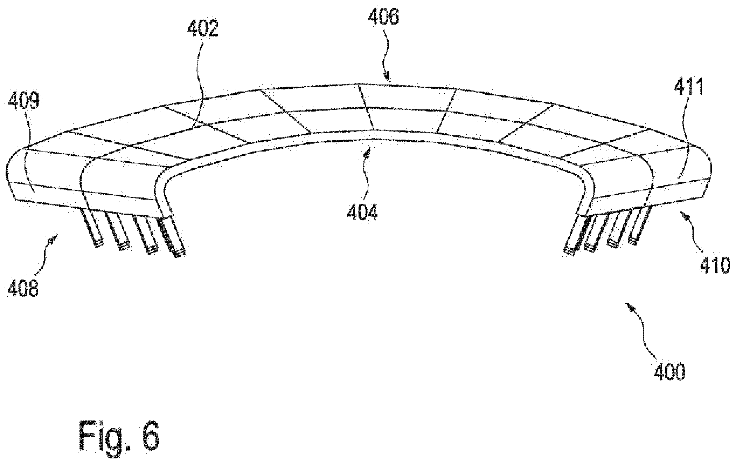

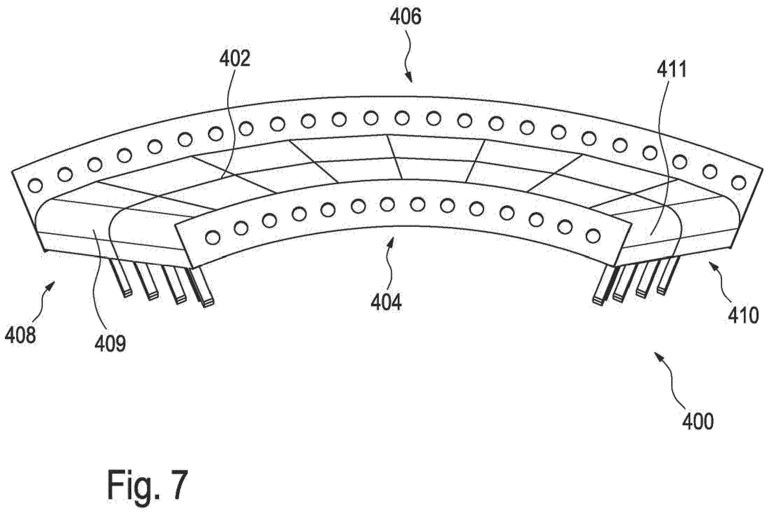

Die Figuren 4 - 7 zeigen eine schematische, dreidimensionale Ansicht einer beispielhaften Ausführungsform eines Windenergieanlagen-Stahlturmringsegments. Das Stahlturmringsegment 400 weist ein Mantelsegment 402 auf, das sich von der oberen Horizontalstoßseite 404 zu der unteren Horizontalstoßseite 406 und von der orthogonal hierzu angeordneten ersten Vertikalstoßseite 408 zu der zweiten Vertikalstoßseite 410 erstreckt. An der oberen Horizontalstoßseite 404 ist ein oberer Horizontalflansch 405 angeordnet, der angeordnet und ausgebildet ist, das Stahlturmringsegment 400 mit einem vertikal benachbarten weiteren Stahlturmringsegment zu verbinden. Analog hierzu ist an der unteren Horizontalstoßseite 406 ein unterer Horizontalflansch 407 angeordnet. Der untere Horizontalflansch 407 weist ferner Durchtrittsöffnungen auf, um das Stahlturmringsegment 400 mit einem vertikal benachbarten weiteren Stahlturmringsegment zu verbinden. Die Durchtrittsöffnungen des unteren Vertikalflansches 407 sind doppelreihig ausgeführt, sodass jeweils zwei radial voneinander beabstandet sind. Zwischen dieser radialen Beabstandung der Durchtrittsöffnungen ist das Mantelsegment 402 angeordnet. Daher sind also zum einen Durchtrittsöffnungen auf einer inneren Seite des Mantelsegments am Vertikalflansch 407 angeordnet und darüber hinaus Durchtrittsöffnungen auf einer äußeren Seite in Bezug auf das Mantelsegment 402 am Vertikalflansch 407.

Das Stahlturmringsegment 400 weist ferner an den Vertikalflanschen 409 und 411 eine Mehrzahl an Anschlusselementen 432 bis 450 auf. In einem Abschnitt angrenzend an die Horizontalstoßseite 404 sind ein erstes Anschlusselement 432 und ein drittes Anschlusselement 436 am ersten Vertikalflansch 409 angeordnet. Das erste Anschlusselement 432 und das dritte Anschlusselement 436 sind unmittelbar benachbart und weisen einen geringen Abstand zueinander auf. Analog hierzu sind das zweite Anschlusselement 434 und das vierte Anschlusselement 438 an dem zweiten Vertikalflansch 411 angeordnet. Am ersten Vertikalflansch 409 sind ferner das fünfte Anschlusselement 440, das siebte Anschlusselement 444 sowie das neunte Anschlusselement 448 angeordnet, wobei das dritte Anschlusselement 436, das fünfte Anschlusselement 440, das siebte Anschlusselement 444 und das neunte Anschlusselement 448 äquidistant zueinander angeordnet sind. Analog hierzu sind das vierte Anschlusselement 438, das sechste Anschlusselement 442, das achte Anschlusselement 446 und das zehnte Anschlusselement 450 am zweiten Vertikalflansch 411 angeordnet. Die an einem Vertikalflansch 409, 411 angeordneten Anschlusselemente 432 - 450 können alternativ auch nicht äquidistant zueinander angeordnet sein. Die Anschlusselemente 432, 434 weisen ferner eine gleiche Beanstandung zu der oberen Horizontalstoßseite 404 auf. Die Anschlusselemente 432, 434 sind somit auf der gleichen Höhe angeordnet. Das gleiche gilt für die Anschlusselemente 436, 438, die Anschlusselemente 440, 442, die Anschlusselemente 444, 446 und die Anschlusselemente 448, 450. Darüber hinaus können die Anschlusselemente jeweils unterschiedliche Beabstandungen zu der oberen Horizontalstoßseite 404 aufweisen, so dass keine zwei gegenüberliegenden Anschlusselemente vorhanden sind, die die gleiche Beabstandung zu der oberen Horizontalstoßseite 404 aufweisen.

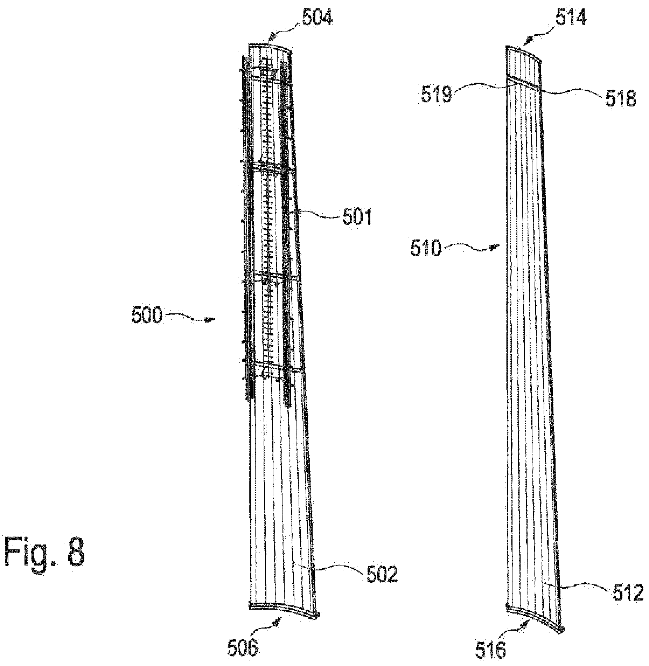

Figur 8 zeigt eine schematische, dreidimensionale Ansicht zweier beispielhafter Ausführungsformen von Windenergieanlagen-Stahlturmringsegmenten. Das erste Stahlturmringsegment 500 weist ein Mantelsegment 502 auf, das sich von der oberen Horizontalstoßseite 504 zu der unteren Horizontalstoßseite 506 erstreckt. An den Vertikalstoßseiten sind analog zu den im Vorherigen beschriebenen Figuren Vertikalflansche angeordnet, an denen wiederum Anschlusselemente ausgebildet sind.

An dem ersten Stahlturmringsegment 500 sind zwischen den auf gleicher Höhe angeordneten Anschlusselementen des ersten und des zweiten Vertikalflansches Tragbalken angeordnet, an denen ein Kabelleiter 501 angeordnet ist. Die Anordnung des Tragbalkens kann insbesondere der Ausbildung des zweiten Stahlturmringsegments 510 entnommen werden, das sich mit seinem Mantelsegment 512 ebenfalls von einer oberen Horizontalstoßseite 514 zu einer unteren Horizontalstoßseite 516 erstreckt und bei dem sich ein Tragbalken 519 von einem ersten Anschlusselement zu einem zweiten Anschlusselement 518 erstreckt.

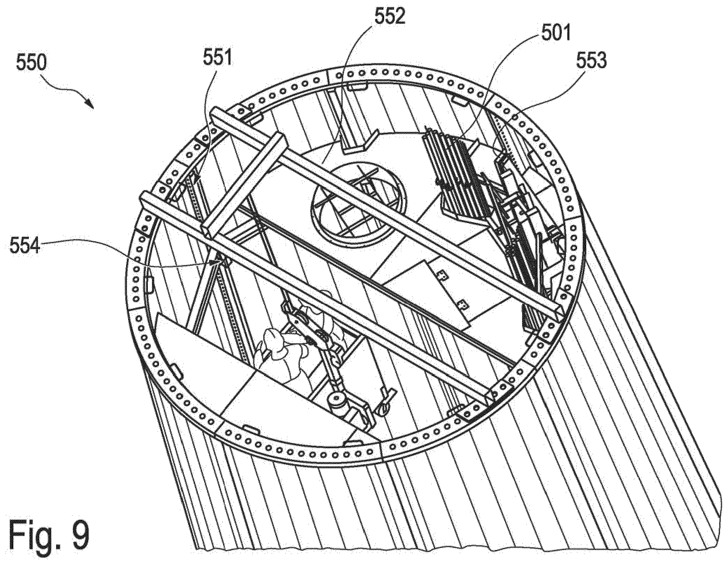

Figur 9 zeigt eine schematische, dreidimensionale Ansicht einer beispielhaften Ausführungsform eines Turmes. Der Turm 550 weist insgesamt acht Stahlturmringsegmente auf, die an vertikalen Stößen 551 mit ihren Vertikalstoßseiten aneinanderstoßen und dort mit ihren Vertikalflanschen miteinander befestigt werden. Ferner ist die Anordnung eines Kabelleiters 501 gezeigt, welcher mittels eines Tragbalkens, welcher an Anschlusselementen 553 angeordnet ist, befestigt ist. Weitere Tragbalken sind beispielsweise an dem Anschlusselement 554 angeordnet. Ferner erstreckt sich ein Podest 552 in horizontaler Richtung.

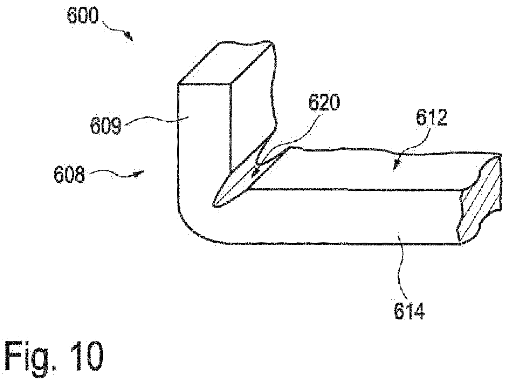

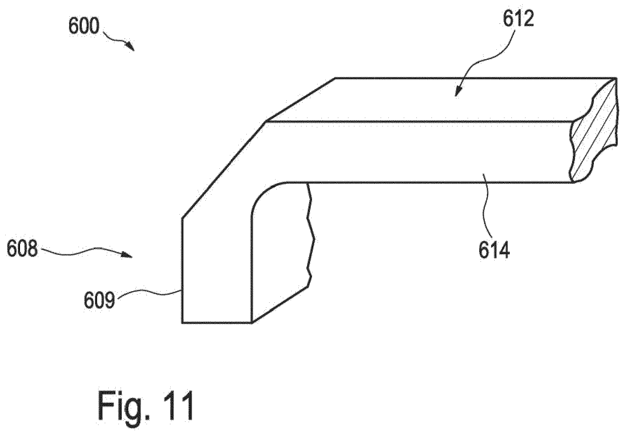

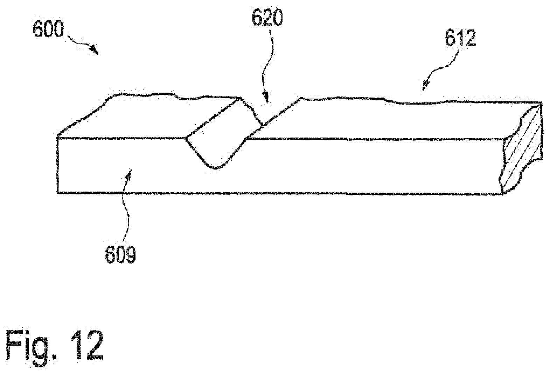

In den Figuren 10 bis 12 werden Stahlturmringsegmente 600 mit einem Mantelsegment 612 und einem ersten Vertikalflansch 609 an der ersten Vertikalstoßseite 608 des Stahlturmringsegments 600 gezeigt. Die Perspektive in den Figuren 10 bis 12 ist derart gewählt, dass die obere Horizontalstoßseite 614 ersichtlich ist. Insbesondere kann den Figuren 10 bis 12 eine Ausnehmung 620 entnommen werden, die in einem Biegeabschnitt, vorzugsweise entlang einer Biegelinie, im Übergang zwischen dem Mantelsegment 612 und dem ersten Vertikalflansch 609 angeordnet ist. In der Figur 12 ist das Ausgangsmaterial für den Biegevorgang zur Herstellung eines Stahlturmringsegments 600 mit einem Mantelsegment 612 und einem ersten Vertikalflansch 609 gezeigt. In dem zukünftigen Biegebereich zwischen dem Mantelsegment 612 und dem ersten Vertikalflansch 609 ist hier eine als Fuge ausgebildete Ausnehmung 620 angeordnet, durch die die Materialstärke zumindest abschnittsweise im Biegebereich reduziert ist. In der in Figur 12 gezeigten Ausführungsvariante würde dieser erste Vertikalflansch 609 in der dargestellten Ausgangslage mit dem Uhrzeigersinn nach oben gebogen werden. Durch die Ausnehmung 620 wäre der Biegevorgang vereinfacht. In der in Figur 11 gezeigten Ausführungsvariante ist der Vertikalflansch 609 relativ zu dem Mantelsegment 612 entgegen dem Uhrzeigersinn gebogen. Die Ausnehmung 620 ist eine einfache und kostengünstig herstellbare Möglichkeit zur Reduzierung der Biegekräfte, um ein Stahlturmringsegment 600 gemäß den Figuren 10 und 11 herzustellen.

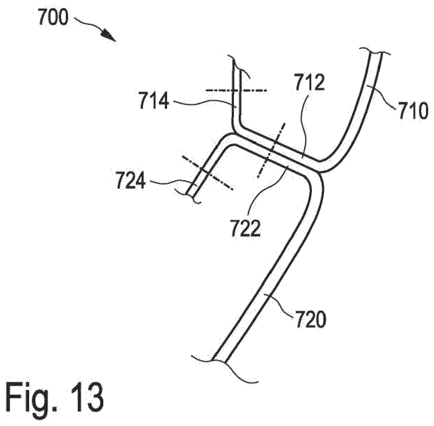

In Figur 13 ist eine alternative Anordnung der Anschlusselemente 714, 724 gezeigt. Die Mantelsegmente 710, 720 sind zu einem Windenergieanlagen-Turmabschnitt 700 angeordnet, wobei die Mantelsegmente 710, 720 an einem im Wesentlichen vertikalen Stoß mit ihren Vertikalflanschen 712, 714 aneinanderstoßen und an dem vertikalen Stoß miteinander verbunden sind. Das Anschlusselement 714 kragt von dem ersten Vertikalflansch 712 und das Anschlusselement 724 kragt von dem zweiten Vertikalflansch 714 aus. Der erste Vertikalflansch 712 und das Anschlusselement 714 schließen einen ungleichen Winkel mit dem Mantelsegment 710 ein. Das Anschlusselement 714 erstreckt sich somit nicht in die gleiche Richtung wie der Vertikalflansch 712 von dem Mantelsegment 710 hinweg. Das Anschlusselement 724 ist analog hierzu angeordnet. Derartige Anschlusselemente sind vor allem durch die weitere Abkantung insbesondere für Trägerauflager vorgesehen, bei denen eine zusätzliche Abkantung der Anschlusselemente zu den Vertikalflanschen vorteilhaft ist. Die Trägerauflager sind ausgebildet und angeordnet, Träger aufzunehmen. Die Träger können beispielsweise als Balkenelemente ausgebildet sein. An den Trägern kann eine Plattform im Inneren des Turmes angeordnet werden.

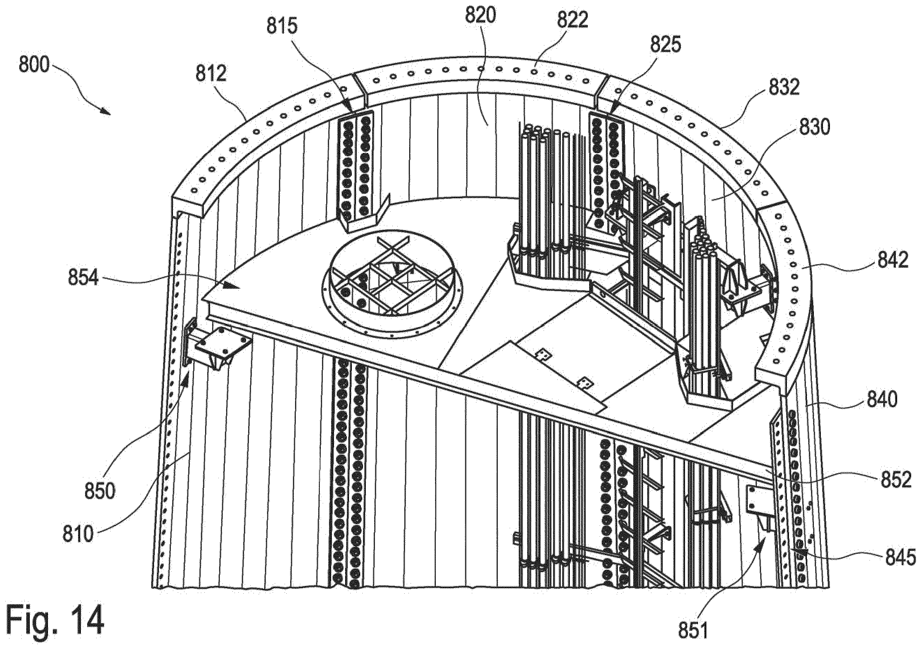

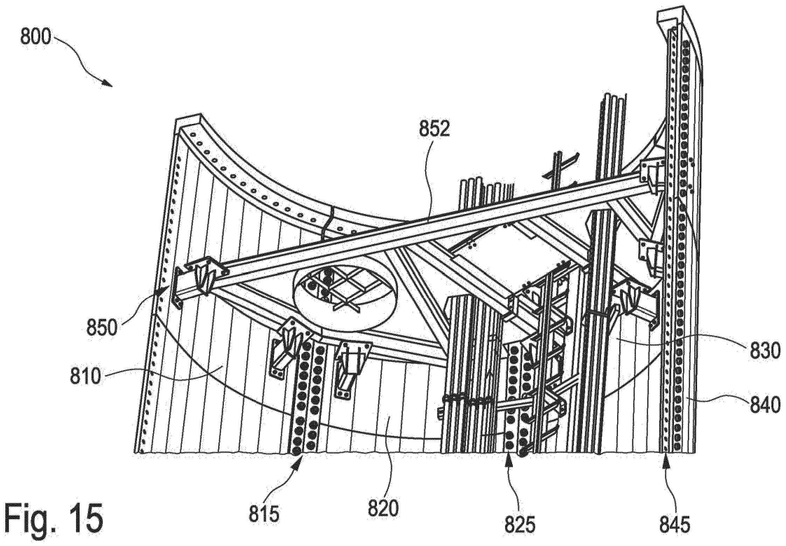

Die Figuren 14 und 15 zeigen eine schematische, dreidimensionale Teilansicht eines Windenergieanlagen-Turmes. Der Turm 800 umfasst insgesamt acht Stahlturmringsegmente, von denen das erste Stahlturmringsegment 810, das zweite Stahlturmringsegment 820, das dritte Stahlturmringsegment 830 und das vierte Stahlturmringsegment 840 gezeigt sind. An der oberen Horizontalstoßseite der Stahlturmringsegmente 810, 820, 830, 840 ist jeweils ein oberer Horizontalflansch 812, 822, 832, 842 angeordnet, der ausgebildet ist, die Stahlturmringsegmente 810, 820, 830, 840 mit einem, zwei oder mehreren vertikal benachbarten Turmsegmenten, insbesondere Stahlturmringsegmenten, zu verbinden. Das erste Stahlturmringsegment 810 und das zweite Stahlturmringsegment 820 sind mit einem Laschenelement 815 miteinander verbunden, wobei das Laschenelement 815 als gewinkelte Platte ausgeführt ist und mit dem ersten Stahlturmringsegment 810 und dem zweiten Stahlturmringsegment 820 verschraubt ist. Die weiteren Stahlturmringsegmente sind analog mittels Laschenelementen 825, 845 verbunden. Der Turm 800 weist darüber hinaus eine Plattform 854 auf, die durch mehrere Träger 852 gestützt wird. Der Träger 852 ist mittels eines ersten Trägerauflagers 850 und eines in etwa diametral zu diesem angeordneten zweiten Trägerauflagers 850 am Turm 800 befestigt.

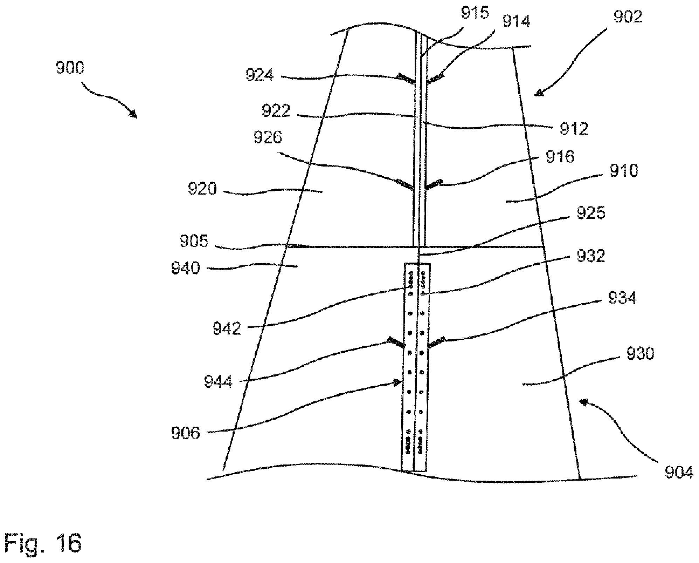

Figur 16 zeigt eine schematische, zweidimensionale Teilansicht einer beispielhaften Ausführungsform eines weiteren Windenergieanlagen-Turmes. Der Turm 900 umfasst einen oberen Turmabschnitt 902, der einer Turmspitze des Turmes 900 zugewandt ist, und einen unteren Turmabschnitt 904, der der Turmspitze des Turmes 900 abgewandt ist. Der obere Turmabschnitt 902 und der untere Turmabschnitt 904 stoßen an einem Horizontalstoß 905 aneinander und sind im Bereich des Horizontalstoßes 905 miteinander verbunden.

Der obere Turmabschnitt 902 umfasst ein erstes Stahlturmringsegment 910 mit einer ersten Vertikalstoßseite und zweites Stahlturmringsegment 920 mit einer zweiten Vertikalstoßseite. Das erste Stahlturmringsegment 910 und das zweite Stahlturmringsegment 920 sind horizontal benachbart zueinander angeordnet. Das erste Stahlturmringsegment 910 und das zweite Stahlturmringsegment 920 stoßen mit ihren Vertikalstoßseiten an einem oberen Vertikalstoß 915 aneinander.

An dem ersten Stahlturmringsegment 910 ist an der ersten Vertikalstoßseite ein erster Vertikalflansch 912 angeordnet. Analog ist an dem zweiten Stahlturmringsegment 920 an der zweiten Vertikalstoßseite ein zweiter Vertikalflansch 922 angeordnet. Die Vertikalflansche 912, 922 schließen jeweils einen Winkel mit den wandausbildenden Abschnitten der Stahlturmringsegmente 910, 920 ein. An den Vertikalflanschen 912, 922 sind nicht gezeigte, horizontal ausgerichtete Durchtrittsöffnungen angeordnet. Die Durchtrittsöffnungen sind insbesondere derart angeordnet und ausgebildet, dass die Vertikalflansche 912, 922 mittels Befestigungselemente miteinander verbindbar sind. Durch eine Verbindung der Vertikalflansche 912, 922 miteinander erfolgt auch eine Verbindung der Stahlturmringsegmente 910, 920 miteinander.

An dem ersten Vertikalflansch 912 sind ein erstes Anschlusselement 914 und ein zweites Anschlusselement 916 ausgebildet, die ausgehend von dem ersten Vertikalflansch 912 auskragen. Die Anschlusselemente 914, 916 sowie auch alle weiteren im Folgenden beschriebenen Anschlusselemente sind insbesondere zur Anordnung von Funktionselementen angeordnet und ausgebildet. An dem zweiten Vertikalflansch 922 sind ebenfalls zwei Anschlusselemente 924, 926 ausgebildet, die vom zweiten Vertikalflansch 922 auskragen.

Der untere Turmabschnitt 904 ist insbesondere als Laschen-Stahlturmabschnitt ausgebildet, wobei das erste und zweite Laschen-Stahlturmringsegment des Laschen-Stahlturmabschnitts im folgenden als drittes Stahlturmringsegment 930 und ein viertes Stahlturmringsegment 940 bezeichnet werden. Das dritte Stahlturmringsegment 930 und das vierte Stahlturmringsegment 940 stoßen an einem unteren Vertikalstoß 925 jeweils mit ihren Vertikalstoßseiten aneinander. An dem unteren Vertikalstoß 925 ist ein Laschenelement 906 angeordnet, welches mit dem dritten Stahlturmringsegment 930 und dem vierten Stahlturmringsegment 940 verbunden ist. Die Verbindung ist insbesondere mit Befestigungselementen 932, 942 realisiert, wobei die vertikale Beabstandung der Befestigungselemente in einem Mittenabschnitt des Laschenelements 906 größer ist als in den zwei Endabschnitten des Laschenelements 906. In den Endabschnitten des Laschenelements 906 ist die vertikale Beabstandung der Befestigungselemente vielmehr so gering wie möglich gewählt. Das dritte Stahlturmringsegment 930 und das vierte Stahlturmringsegment 940 werden somit am unteren Vertikalstoß 925 durch das Laschenelement 906 miteinander verbunden und zusammengehalten. Der untere Turmabschnitt 904 weist ebenfalls Anschlusselemente 934, 944 auf, wobei das Laschenelement 906 die Anschlusselemente 934, 944 aufweist. Die Anschlusselemente 934, 944 kragen von dem Laschenelement 906 aus.

Durch an Vertikalflanschen 309, 311, 409, 411 angeordnete Anschlusselemente 212, 214, 230 bis 246, 312 bis 318, 432 bis 450, 554, 453 wird die Qualität eines Windenergieanlagen-Turmes 550 sowie die Kosten zur Fertigung und Montage reduziert. Es hat sich ferner gezeigt, dass sich durch die Anschlusselemente 212, 214, 230 bis 246, 312 bis 318, 432 bis 450, 554, 453 die Arbeitssicherheit bei der Montage eines Windenergieanlagen-Turmes 550 erhöht. Die Kostenreduktion tritt zum einen dadurch ein, dass die Anschlusselemente 212, 214, 230 bis 246, 312 bis 318, 432 bis 450, 554, 453 bereits ab Werk an den Vertikalflanschen 309, 311, 409, 411 angeordnet werden können. Darüber hinaus ist die Montage der einzelnen Stahlturmringsegmente 200, 220, 300, 400, 500, 510 besonders vereinfacht, da diese im Wesentlichen keinen Verzug durch die Einbringung von Wärme, beispielsweise durch Schweißen, erfahren. Somit vereinfacht sich die Montage für die Monteure auf der Baustelle, wobei insbesondere keine verzogenen Stahlturmringsegmente 200, 220, 300, 400, 500, 510 mehr miteinander verbunden werden müssen. Darüber hinaus ist die Anordnung unterschiedlichster Funktionselemente innerhalb eines Turmes 550 bzw. eines aufzubauenden Turmes vereinfacht, sodass ebenfalls die Montagezeit reduziert werden kann.

### BEZUGSZEICHEN

- 100: Windenergieanlage
- 102: Turm
- 104: Gondel
- 106: Rotor
- 108: Rotorblätter
- 110: Spinner
- 200: Stahlturmringsegment
- 202: Mantelsegment
- 204: obere Horizontalstoßseite
- 206: untere Horizontalstoßseite
- 208: erste Vertikalstoßseite
- 210: zweite Vertikalstoßseite
- 212: erstes Anschlusselement
- 214: zweites Anschlusselement
- 220: Stahlturmringsegment
- 222: Mantelsegment
- 224: obere Horizontalstoßseite
- 226: untere Horizontalstoßseite
- 228: erste Vertikalstoßseite
- 230: zweite Vertikalstoßseite
- 232: erstes Anschlusselement
- 234: zweites Anschlusselement
- 236: drittes Anschlusselement
- 238: viertes Anschlusselement
- 240: fünftes Anschlusselement
- 242: sechstes Anschlusselement
- 244: siebtes Anschlusselement
- 246: achtes Anschlusselement
- 300: Stahlturmringsegment
- 302: Mantelsegment
- 304: obere Horizontalstoßseite
- 308: erste Vertikalstoßseite
- 309: erster Vertikalflansch
- 310: zweite Vertikalstoßseite
- 311: zweiter Vertikalflansch
- 312: erstes Anschlusselement
- 314: zweites Anschlusselement
- 316: drittes Anschlusselement
- 318: viertes Anschlusselement
- 400: Stahlturmringsegment
- 402: Mantelsegment
- 404: obere Horizontalstoßseite
- 405: oberer Horizontalflansch
- 406: untere Horizontalstoßseite
- 407: unterer Horizontalflansch
- 408: erste Vertikalstoßseite
- 409: erster Vertikalflansch
- 410: zweite Vertikalstoßseite
- 411: zweiter Vertikalflansch
- 432: erstes Anschlusselement
- 434: zweites Anschlusselement
- 436: drittes Anschlusselement
- 438: viertes Anschlusselement
- 440: fünftes Anschlusselement
- 442: sechstes Anschlusselement
- 444: siebtes Anschlusselement
- 446: achtes Anschlusselement
- 448: neuntes Anschlusselement
- 450: zehntes Anschlusselement
- 500: erstes Stahlturmringsegment
- 501: Kabelleiter
- 502: Mantelsegment
- 504: obere Horizontalstoßseite
- 506: untere Horizontalstoßseite
- 510: zweites Stahlturmringsegment
- 512: Mantelsegment
- 514: obere Horizontalstoßseite
- 516: untere Horizontalstoßseite
- 518: Anschlusselement
- 519: Tragbalken
- 550: Turm
- 551: vertikaler Stoß
- 552: Podest
- 553: Anschlusselement
- 554: Anschlusselement
- 600: Stahlturmringsegment
- 608: erste Vertikalstoßseite
- 609: erster Vertikalflansch
- 612: Mantelsegment
- 614: obere Horizontalstoßseite
- 620: Ausnehmung
- 700: Windenergieanlagen-Turmsegment
- 710,720: Mantelsegment
- 712,722: Vertikalflansch
- 714,724: Anschlusselement
- 800: Turm
- 810: erstes Stahlturmringsegment
- 812: erster oberer Horizontalflansch
- 815: erstes Laschenelement
- 820: zweites Stahlturmringsegment
- 822: zweiter oberer Horizontalflansch
- 825: zweites Laschenelement
- 830: drittes Stahlturmringsegment
- 832: dritter oberer Horizontalflansch
- 840: viertes Stahlturmringsegment
- 842: vierter oberer Horizontalflansch
- 845: viertes Laschenelement
- 850: erstes Trägerauflager
- 851: zweites Trägerauflager
- 852: Träger
- 854: Plattform
- 900: Turm
- 902: oberer Turmabschnitt
- 904: unterer Turmabschnitt
- 905: Horizontalstoß
- 906: Laschenelement
- 910: erstes Stahlturmringsegment
- 912: erster Vertikalflansch
- 914: erstes Anschlusselement
- 915: oberer Vertikalstoß
- 916: zweites Anschlusselement
- 920: zweites Stahlturmringsegment
- 922: zweiter Vertikalflansch
- 924: drittes Anschlusselement
- 925: unterer Vertikalstoß
- 926: viertes Anschlusselement
- 930: drittes Stahlturmringsegment
- 932: Befestigungselement
- 934: fünftes Anschlusselement
- 940: viertes Stahlturmringsegment
- 942: Befestigungselement
- 944: sechstes Anschlusselement
- H: Segmenthöhe
- D: Segmentdicke
- R: Ringrichtung

## Patentansprüche

1. Windenergieanlagen-Stahlturmringsegment (200) für einen Windenergieanlagen-Turm (102, 550, 800, 900), umfassend
- ein Mantelsegment (202, 222, 302, 402, 502, 512, 612, 710, 720) mit einer Erstreckung in Richtung einer Segmenthöhe (H), einer Segment-Ringrichtung (R) und einer Segmentdicke (D) mit
∘ einer ersten Horizontalstoßseite (204, 224, 304, 404, 504, 514, 614) und einer zweiten Horizontalstoßseite (206, 226, 406, 506, 516),
∘ einer ersten Vertikalstoßseite (208, 228, 308, 408, 608) und einer zweiten Vertikalstoßseite (210, 230, 310, 410),
- wobei an der ersten Vertikalstoßseite (208, 228, 308, 408, 608) ein erster Vertikalflansch (309, 409, 609, 912) angeordnet ist und/oder an der zweiten Vertikalstoßseite (210, 230, 310, 410) ein zweiter Vertikalflansch (311, 411, 922) angeordnet ist, wobei der erste Vertikalflansch (309, 409, 609, 912) und/oder der zweite Vertikalflansch (311, 411, 922) einen Winkel mit dem Mantelsegment (202, 222, 302, 402, 502, 512, 612, 710, 720) einschließt bzw. einschließen,
- wobei an dem ersten Vertikalflansch (309, 409, 609, 912) und/oder an dem zweiten Vertikalflansch (311, 411, 922) mindestens ein Anschlusselement (212, 214, 232, 234, 236, 238, 240, 242, 244, 246, 312, 314, 316, 318, 432, 434, 436, 438, 404, 442, 444, 446, 448, 450, 518, 553, 554, 714, 724) zur Anordnung von Funktionselementen ausgebildet ist, wobei das Anschlusselement (212, 214, 232, 234, 236, 238, 240, 242, 244, 246, 312, 314, 316, 318, 432, 434, 436, 438, 404, 442, 444, 446, 448, 450, 518, 553, 554, 714, 724) ausgehend von dem ersten Vertikalflansch (309, 409, 609, 912) und/oder dem zweiten Vertikalflansch (311, 411, 922) auskragt,
**dadurch gekennzeichnet, dass**
- wobei der erste Vertikalflansch (309, 409, 609, 912) und/oder der zweite Vertikalflansch (311, 411, 922) und das Anschlusselement (212, 214, 232, 234, 236, 238, 240, 242, 244, 246, 312, 314, 316, 318, 432, 434, 436, 438, 404, 442, 444, 446, 448, 450, 518, 553, 554, 714, 724) den gleichen Winkel mit dem Mantelsegment (202, 222, 302, 402, 502, 512, 612, 710, 720) einschließen.

2. Windenergieanlagen-Stahlturmringsegment nach dem vorhergehenden Anspruch, wobei
- das Anschlusselement einen Anschlusswinkel mit dem Mantelsegment einschließt, der verschieden ist von einem Flanschwinkel, den der erste Vertikalflansch und/oder der zweite Vertikalflansch mit dem Mantelsegment einschließt bzw. einschließen.

3. Windenergieanlagen-Stahlturmringsegment nach mindestens einem der vorhergehenden Ansprüche, wobei
- sich das Anschlusselement in Richtung einer Anschlusshöhe, einer Anschlussbreite und einer Anschlussdicke erstreckt, und/oder
- das Anschlusselement durch die Erstreckung in Richtung der Anschlusshöhe und der Anschlussbreite eine im Wesentlichen flächige Erstreckung aufweist,
- wobei vorzugsweise die flächige Erstreckung im Wesentlichen rechteckig ist.

4. Windenergieanlagen-Stahlturmringsegment nach mindestens einem der vorhergehenden Ansprüche, wobei
- die Erstreckung des Anschlusselementes in Richtung der Anschlusshöhe um ein Vielfaches geringer ist als eine Erstreckung des Mantelsegments in Richtung der Segmenthöhe, und
- vorzugsweise die Erstreckung des Anschlusselements in Richtung der Anschlusshöhe kleiner 20%, und/oder kleiner 15%, und/oder kleiner 10%, und/oder kleiner 5%, und/oder kleiner 2%, und/oder kleiner 1%, und/oder kleiner 0,1% der Erstreckung des Mantelsegments in Richtung der Segmenthöhe ist.

5. Windenergieanlagen-Stahlturmringsegment nach mindestens einem der vorhergehenden Ansprüche, wobei die flächige Erstreckung des Anschlusselements eine Flächennormale aufweist, wobei die Flächennormale in Richtung der Segmenthöhe und/oder der Segment-Ringrichtung und/oder in Richtung der Segmentdicke ausgerichtet ist.

6. Windenergieanlagen-Stahlturmringsegment nach mindestens einem der vorhergehenden Ansprüche, wobei die Anschlussdicke und eine Flanschdicke die gleiche Abmessung aufweisen.

7. Windenergieanlagen-Stahlturmringsegment nach mindestens einem der vorhergehenden Ansprüche, umfassend ein erstes Anschlusselement und ein zweites Anschlusselement, wobei
- das erste Anschlusselement an dem ersten Vertikalflansch und das zweite Anschlusselement an dem zweiten Vertikalflansch angeordnet ist, wobei
- das erste Anschlusselement und das zweite Anschlusselement die gleiche Beabstandung zu der ersten Horizontalstoßseite und/oder der zweiten Horizontalstoßseite aufweisen.

8. Windenergieanlagen-Stahlturmringsegment nach mindestens einem der vorhergehenden Ansprüche, umfassend ein drittes Anschlusselement und ein viertes Anschlusselement, wobei
- die Fläche der flächigen Erstreckung des ersten Anschlusselementes und des zweiten Anschlusselementes mehr als die zweifache Größe der Fläche der flächigen Erstreckung des dritten Anschlusselementes und des vierten Anschlusselementes aufweisen, und/oder
- das erste Anschlusselement und das dritte Anschlusselement am ersten Vertikalflansch angeordnet sind und das zweite Anschlusselement und das vierte Anschlusselement an dem zweiten Vertikalflansch angeordnet sind.

9. Windenergieanlagen-Stahlturmringsegment nach mindestens einem der vorhergehenden Ansprüche, wobei
- das Mantelsegment und der erste Vertikalflansch und/oder das Mantelsegment und der zweite Vertikalflansch einstückig ausgebildet sind.

10. Windenergieanlagen-Stahlturmringsegment nach mindestens einem der vorhergehenden Ansprüche, wobei
- das Mantelsegment einen teilringförmigen Querschnitt aufweist, wobei eine Flächennormale dieses Querschnitts im Wesentlichen parallel zur Segmenthöhe ausgerichtet ist, und
- der teilringförmige Querschnitt einen teilkreisförmigen Verlauf aufweist, und/oder
- der teilringförmige Querschnitt durch zwei oder mehrere gerade Abschnitte ausgebildet wird, wobei die zwei oder mehreren geraden Abschnitte gewinkelt zueinander angeordnet sind.

11. Windenergieanlagen-Turmabschnitt, umfassend
- mindestens ein erstes Windenergieanlagen-Stahlturmringsegment nach mindestens einem der Ansprüche 1-10 und ein zweites Windenergieanlagen-Stahlturmringsegment nach mindestens einem der Ansprüche 1-10,
- wobei das erste Windenergieanlagen-Stahlturmringsegment und das zweite Windenergieanlagen-Stahlturmringsegment an mindestens einem im Wesentlichen vertikalen Stoß mit Vertikalflanschen aneinanderstoßen, und
- wobei das erste Windenergieanlagen-Stahlturmringsegment und das zweite Windenergieanlagen-Stahlturmringsegment an dem mindestens einen im Wesentlichen vertikalen Stoß miteinander verbunden sind.

12. Windenergieanlagen-Turm, umfassend zwei oder mehrere übereinander angeordnete Windenergieanlagen-Turmabschnitte nach dem vorhergehenden Anspruch.

13. Windenergieanlage, umfassend einen Windenergieanlagen-Turm nach dem vorhergehenden Anspruch.

14. Verfahren zur Herstellung eines Windenergieanlagen-Turmabschnitts, insbesondere eines Windenergieanlagen-Turmabschnitts nach Anspruch 11, umfassend
- Bereitstellen mindestens eines ersten Windenergieanlagen-Stahlturmringsegments und eines zweiten Windenergieanlagen-Stahlturmringsegments nach mindestens einem der Ansprüche 1-10,
- Anordnen des ersten Windenergieanlagen-Stahlturmringsegments und des zweiten Windenergieanlagen-Stahlturmringsegments an mindestens einem vertikalen Stoß mit jeweils einer der Vertikalstoßseiten,
- Verbinden des ersten Windenergieanlagen-Stahlturmringsegments und des zweiten Windenergieanlagen-Stahlturmringsegments an dem mindestens einen vertikalen Stoß durch Befestigen zweier benachbarter Vertikalflansche.

15. Verfahren nach dem vorhergehenden Anspruch, umfassend Anordnen eines Funktionselements, beispielsweise einer Trageinheit, an mindestens einem Anschlusselement.

## Claims

1. A wind turbine steel tower ring segment (200) for a wind turbine tower (102, 550, 800, 900), comprising
- a shell segment (202, 222, 302, 402, 502, 512, 612, 710, 720) with an extent in the direction of a segment height (H), of a segment ring direction (R) and of a segment thickness (D) and with
∘ a first horizontal joint side (202, 224, 304, 404, 504, 514, 614) and a second horizontal joint side (206, 226, 406, 506, 516),
∘ a first vertical joint side (208, 228, 308, 408, 608) and a second vertical joint side (210, 230, 310, 410),
- wherein a first vertical flange (309, 409, 609, 912) is arranged at the first vertical joint side (208, 228, 308, 408, 608) and/or a second vertical flange (311, 411, 922) is arranged at the second vertical joint side (210, 230, 310, 410), wherein the first vertical flange (309, 409, 609, 912) and/or the second vertical flange (311, 411, 922) enclose(s) an angle with the shell segment (202, 222, 302, 402, 502, 512, 612, 710, 720),
- wherein at least one connection element (212, 214, 232, 234, 236, 238, 240, 242, 244, 246, 312, 314, 316, 318, 432, 434, 436, 438, 404, 442, 444, 446, 448, 450, 518, 553, 554, 714, 724) for the arrangement of functional elements is formed on the first vertical flange (309, 409, 609, 912) and/or on the second vertical flange (311, 411, 922), wherein the connection element (212, 214, 232, 234, 236, 238, 240, 242, 244, 246, 312, 314, 316, 318, 432, 434, 436, 438, 404, 442, 444, 446, 448, 450, 518, 553, 554, 714, 724) projects from the first vertical flange (309, 409, 609, 912) and/or the second vertical flange (311, 411, 922),
**characterized in that**
- wherein the first vertical flange (309, 409, 609, 912) and/or the second vertical flange (311, 411, 922) and the connection element (212, 214, 232, 234, 236, 238, 240, 242, 244, 246, 312, 314, 316, 318, 432, 434, 436, 438, 404, 442, 444, 446, 448, 450, 518, 553, 554, 714, 724) enclose the same angle with the shell segment (202, 222, 302, 402, 502, 512, 612, 710, 720).

2. The wind turbine steel tower ring segment as claimed in the preceding claim, wherein
- the connection element encloses a connection angle with the shell segment, which connection angle differs from a flange angle which the first vertical flange and/or the second vertical flange enclose(s) with the shell segment.

3. The wind turbine steel tower ring segment as claimed in at least one of the preceding claims, wherein
- the connection element extends in the direction of a connection height, of a connection width and of a connection thickness, and/or
- the connection element has a substantially areal extent owing to the extent in the direction of the connection height and of the connection width,
- wherein the areal extent is preferably substantially rectangular.

4. The wind turbine steel tower ring segment as claimed in at least one of the preceding claims, wherein
- the extent of the connection element in the direction of the connection height is several times smaller than an extent of the shell segment in the direction of the segment height, and
- the extent of the connection element in the direction of the connection height is preferably less than 20%, and/or less than 15%, and/or less than 10%, and/or less than 5%, and/or less than 2%, and/or less than 1%, and/or less than 0.1%, of the extent of the shell segment in the direction of the segment height.

5. The wind turbine steel tower ring segment as claimed in at least one of the preceding claims, wherein the areal extent of the connection element has a surface normal, wherein the surface normal is oriented in the direction of the segment height and/or of the segment ring direction and/or in the direction of the segment thickness.

6. The wind turbine steel tower ring segment as claimed in at least one of the preceding claims, wherein the connection thickness and a flange thickness have the same dimension.

7. The wind turbine steel tower ring segment as claimed in at least one of the preceding claims, comprising a first connection element and a second connection element, wherein
- the first connection element is arranged on the first vertical flange and the second connection element is arranged on the second vertical flange, wherein
- the first connection element and the second connection element have the same spacing to the first horizontal joint side and/or the second horizontal joint side.

8. The wind turbine steel tower ring segment as claimed in at least one of the preceding claims, comprising a third connection element and a fourth connection element, wherein
- the area of the areal extent of the first connection element and of the second connection element is more than two times the size of the area of the areal extent of the third connection element and of the fourth connection element, and/or
- the first connection element and the third connection element are arranged on the first vertical flange and the second connection element and the fourth connection element are arranged on the second vertical flange.

9. The wind turbine steel tower ring segment as claimed in at least one of the preceding claims, wherein
- the shell segment and the first vertical flange and/or the shell segment and the second vertical flange are formed as a single piece.

10. The wind turbine steel tower ring segment as claimed in at least one of the preceding claims, wherein
- the shell segment has a part-ring-shaped cross section, wherein a surface normal of said cross section is oriented substantially parallel to the segment height, and
- the part-ring-shaped cross section has a part-circle-shaped profile, and/or
- the part-ring-shaped cross section is formed by two or more straight portions, wherein the two or more straight portions are arranged at an angle with respect to one another.

11. A wind turbine tower portion, comprising
- at least a first wind turbine steel tower ring segment as claimed in at least one of claims 1-10 and a second wind turbine steel tower ring segment as claimed in at least one of claims 1-10,
- wherein the first wind turbine steel tower ring segment and the second wind turbine steel tower ring segment abut against one another at at least one substantially vertical joint with vertical flanges, and
- wherein the first wind turbine steel tower ring segment and the second wind turbine steel tower ring segment are connected to one another at the at least one substantially vertical joint.

12. A wind turbine tower comprising two or more wind turbine tower portions as claimed in the preceding claim arranged one above the other.

13. A wind turbine comprising a wind turbine tower as claimed in the preceding claim.

14. A method for producing a wind turbine tower portion, in particular a wind turbine tower portion as claimed in claim 11, comprising
- providing at least a first wind turbine steel tower ring segment and a second wind turbine steel tower ring segment as claimed in at least one of claims 1-10,
- arranging the first wind turbine steel tower ring segment and the second wind turbine steel tower ring segment at least one vertical joint with in each case one of the vertical joint sides,
- connecting the first wind turbine steel tower ring segment and the second wind turbine steel tower ring segment at the at least one vertical joint by fastening two adjacent vertical flanges.

15. The method as claimed in the preceding claim, comprising
- arranging a functional element, for example a supporting unit, at at least one connection element.

## Revendications

1. Segment annulaire de mât en acier d'éolienne (200) pour un mât d'éolienne (102, 550, 800, 900), comprenant
- un segment d'enveloppe (202, 222, 302, 402, 502, 512, 612, 710, 720) avec une extension en direction d'une hauteur de segment (H), une direction annulaire de segment (R) et une épaisseur de segment (D) avec
- - une première face d'aboutement horizontale (204, 224, 304, 404, 504, 514, 614) et une deuxième face d'aboutement horizontale (206, 226, 406, 506, 516),
- - une première face d'aboutement verticale (208, 228, 308, 408, 608) et une deuxième face d'aboutement verticale (210, 230, 310, 410),
- dans lequel un premier flasque vertical (309, 409, 609, 912) est disposé sur la première face d'aboutement verticale (208, 228, 308, 408, 608) et/ou un deuxième flasque vertical (311, 411, 922) est disposé sur la deuxième face d'aboutement verticale (210, 230, 310, 410), dans lequel le premier flasque vertical (309, 409, 609, 912) et/ou le deuxième flasque vertical (311, 411, 922) forment un angle avec le segment d'enveloppe (202, 222, 302, 402, 502, 512, 612, 710, 720),
- dans lequel au moins un élément de raccordement (212, 214, 232, 234, 236, 238, 240, 242, 244, 246, 312, 314, 316, 318, 432, 434, 436, 438, 404, 442, 444, 446, 448, 450, 518, 553, 554, 714, 724) destiné à agencer des éléments fonctionnels est réalisé sur le premier flasque vertical (309, 409, 609, 912) et/ou sur le deuxième flasque vertical (311, 411, 922), dans lequel l'élément de raccordement (212, 214, 232, 234, 236, 238, 240, 242, 244, 246, 312, 314, 316, 318, 432, 434, 436, 438, 404, 442, 444, 446, 448, 450, 518, 553, 554, 714, 724) est en porte-à-faux en partant du premier flasque vertical (309, 409, 609, 912) et/ou du deuxième flasque vertical (311, 411, 922),
**caractérisé en ce que**
- le premier flasque vertical (309, 409, 609, 912) et/ou le deuxième flasque vertical (311, 411, 922) et l'élément de raccordement (212, 214, 232, 234, 236, 238, 240, 242, 244, 246, 312, 314, 316, 318, 432, 434, 436, 438, 404, 442, 444, 446, 448, 450, 518, 553, 554, 714, 724) forment le même angle avec le segment d'enveloppe (202, 222, 302, 402, 502, 512, 612, 710, 720).

2. Segment annulaire de mât en acier d'éolienne selon la revendication précédente, dans lequel
- l'élément de raccordement forme un angle de raccordement avec le segment d'enveloppe, qui est différent d'un angle de flasque, que le premier flasque vertical et/ou le deuxième flasque vertical forment avec le segment d'enveloppe.

3. Segment annulaire de mât en acier d'éolienne selon au moins l'une quelconque des revendications précédentes, dans lequel
- l'élément de raccordement s'étend en direction d'une hauteur de raccordement, d'une largeur de raccordement et d'une épaisseur de raccordement, et/ou
- l'élément de raccordement présente du fait de l'extension en direction de la hauteur de raccordement et de la largeur de raccordement une extension sensiblement plate,
- dans lequel de préférence l'extension plate est sensiblement rectangulaire.

4. Segment annulaire de mât en acier d'éolienne selon au moins l'une quelconque des revendications précédentes, dans lequel
- l'extension de l'élément de raccordement en direction de la hauteur de raccordement est inférieure d'un multiple à une extension du segment d'enveloppe en direction de la hauteur de segment, et
- de préférence l'extension de l'élément de raccordement en direction de la hauteur de raccordement est inférieure à 20 %, et/ou inférieure à 15 %, et/ou inférieure à 10 %, et/ou inférieure à 5 %, et/ou inférieure à 2 %, et/ou inférieure à 1 %, et/ou inférieure à 0,1 % de l'extension du segment d'enveloppe en direction de la hauteur de segment.

5. Segment annulaire de mât en acier d'éolienne selon au moins l'une quelconque des revendications précédentes, dans lequel l'extension plate de l'élément de raccordement présente une normale de surface, dans lequel la normale de surface est orientée en direction de la hauteur de segment et/ou dans la direction annulaire de segment et/ou en direction de l'épaisseur de segment.

6. Segment annulaire de mât en acier d'éolienne selon au moins l'une quelconque des revendications précédentes, dans lequel l'épaisseur de raccordement et une épaisseur de flasque présentent la même dimension.

7. Segment annulaire de mât en acier d'éolienne selon au moins l'une quelconque des revendications précédentes, comprenant un premier élément de raccordement et un deuxième élément de raccordement, dans lequel
- le premier élément de raccordement est disposé sur le premier flasque vertical et le deuxième élément de raccordement est disposé sur le deuxième flasque vertical, dans lequel
- le premier élément de raccordement et le deuxième élément de raccordement présentent le même espacement par rapport à la première face d'aboutement horizontale et/ou à la deuxième face d'aboutement horizontale.

8. Segment annulaire de mât en acier d'éolienne selon au moins l'une quelconque des revendications précédentes, comprenant un troisième élément de raccordement et un quatrième élément de raccordement, dans lequel
- la surface de l'extension plate du premier élément de raccordement et du deuxième élément de raccordement présente une taille plus de deux fois plus grande que la surface de l'extension plate du troisième élément de raccordement et du quatrième élément de raccordement, et/ou
- le premier élément de raccordement et le troisième élément de raccordement sont disposés sur le premier flasque vertical et le deuxième élément de raccordement et le quatrième élément de raccordement sont disposés sur le deuxième flasque vertical.

9. Segment annulaire de mât en acier d'éolienne selon au moins l'une quelconque des revendications précédentes, dans lequel
- le segment d'enveloppe et le premier flasque vertical et/ou le segment d'enveloppe et le deuxième flasque vertical sont réalisés d'un seul tenant.

10. Segment annulaire de mât en acier d'éolienne selon au moins l'une quelconque des revendications précédentes, dans lequel
- le segment d'enveloppe présente une section transversale de forme partiellement annulaire, dans lequel une normale de surface de ladite section transversale est orientée de manière sensiblement parallèle par rapport à la hauteur de segment, et
- la section transversale de forme partiellement annulaire présente un tracé de forme partiellement circulaire, et/ou
- la section transversale de forme partiellement annulaire est réalisée par deux ou plusieurs sections rectilignes, dans lequel les deux ou plusieurs sections rectilignes sont disposées de manière coudée les unes par rapport aux autres.

11. Section de mât d'éolienne comprenant :
- au moins un premier segment annulaire de mât en acier d'éolienne selon au moins l'une quelconque des revendications 1 à 10 et un deuxième segment annulaire de mât en acier d'éolienne selon au moins l'une quelconque des revendications 1 à 10,
- dans laquelle le premier segment annulaire de mât en acier d'éolienne et le deuxième segment annulaire de mât en acier d'éolienne s'aboutent sur au moins un aboutement sensiblement vertical avec des flasques verticaux, et
- dans laquelle le premier segment annulaire de mât en acier d'éolienne et le deuxième segment annulaire de mât en acier d'éolienne sont reliés l'un à l'autre sur l'au moins un aboutement sensiblement vertical.

12. Mât d'éolienne comprenant deux ou plusieurs sections de mât d'éolienne disposées les unes au-dessus des autres selon la revendication précédente.

13. Eolienne comprenant un mât d'éolienne selon la revendication précédente.

14. Procédé de fabrication d'une section de mât d'éolienne, en particulier d'une section de mât d'éolienne selon la revendication 11, comprenant
- la fourniture d'au moins un premier segment annulaire de mât en acier d'éolienne et d'un deuxième segment annulaire de mât en acier d'éolienne selon au moins l'une quelconque des revendications 1 à 10,
- l'agencement du premier segment annulaire de mât en acier d'éolienne et du deuxième segment annulaire de mât en acier d'éolienne sur au moins un aboutement vertical avec respectivement une des faces d'aboutement verticales,
- la liaison du premier segment annulaire de mât en acier d'éolienne et du deuxième segment annulaire de mât en acier d'éolienne sur l'au moins un aboutement vertical en fixant deux flasques verticaux adjacents.

15. Procédé selon la revendication précédente, comprenant
l'agencement d'un élément fonctionnel, par exemple d'une unité de support, sur au moins un élément de raccordement.
